# EUROPÄISCHE PATENTSCHRIFT

(11) **EP 2 803 527 B1**
(45) Veröffentlichungstag und Bekanntmachung des Hinweises auf die Patenterteilung: **05.10.2016**
(21) Anmeldenummer: 14167973.8
(22) Anmeldetag: 12.05.2014
(51) Int. Cl.: B60N 2/50, B60N 2/52

(54) **Fahrzeugschwingungsvorrichtung, Fahrzeugsitz und Fahrzeugkabine**
Vehicle vibration device, vehicle seat and vehicle cab
Dispositif de pivotement de véhicule, siège de véhicule et cabine de véhicule

(30) Priorität: 14.05.2013 DE 102013104926
(43) Veröffentlichungstag der Anmeldung: 19.11.2014
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- DE-A1- 3 517 345
- DE-A1-102010 055 342
- US-A- 3 148 869
- US-A- 3 596 895
- US-A1- 2012 091 773

## Beschreibung

Die Erfindung betrifft eine Fahrzeugschwingungsvorrichtung eines Fahrzeugsitzes oder einer Fahrzeugkabine mit einem Unterteil und mit einem gegenüber diesem Unterteil auslenkbaren Oberteil, bei welcher das Oberteil und das Unterteil mittels mindestens einer Federungseinrichtung federnd miteinander verbunden sind und bei welcher die Federungseinrichtung ein deformierbares Fluidfederteil mit einem flexiblen Druckkammerelement und eine Deformationseinrichtung mit Deformationselementen umfasst, wobei das deformierbare Fluidelement bei einer Auslenkung des Oberteils gegenüber dem Unterteil zumindest teilweise durch die Deformationselemente deformiert wird.

Die Erfindung betrifft auch einen Fahrzeugsitz mit einem Sitzteil, mit einem Rückenlehnenteil und mit einem Sitzunterbau, bei welchem der Sitzunterbau an einem Karosserieteil eines Kraftfahrzeugs angeordnet werden kann.

Die Erfindung betrifft des Weiteren eine Fahrzeugkabine eines Kraftfahrzeugs mit einer Fahrzeugschwingungsvorrichtung zum federnden Lagern der Fahrzeugkabine an einem Karosserieteil des Kraftfahrzeugs.

Gattungsgemäße Fahrzeugschwingungsvorrichtungen sind aus dem Stand der Technik gut bekannt. Beispielsweise ist aus der Offenlegungsschrift DE 10 2010 055 342 A1 ein Fahrzeugsitz mit einer Fahrzeugschwingungsvorrichtung bekannt, bei welcher eine Federeinrichtung, insbesondere eine Horizontalfedereinrichtung, ein sich länglich erstreckendes Fluidfederelement umfasst, auf welches durch eine Deformationseinrichtung zum Verformen des Fluidfederelements Druckkräfte aufbringbar sind, bekannt, um insbesondere eine Sitzfläche des Fahrzeugsitzes federnd gegenüber einer Karosserie eines Fahrzeugs lagern zu können. Hierzu sind das sich länglich erstreckende Fluidfederelement mit seinen Enden beispielsweise an einem sitzflächenseitigen Teil und die Deformationseinrichtung an einem karosserieseitigen Teil derart festgelegt, dass die Federeinrichtung nicht nur federnd, sondern auch dämpfend zwischen der Sitzfläche und der Karosserie wirken kann. Bei entsprechender Ausgestaltung der Fahrzeugschwingungsvorrichtung kann diese Federungseinrichtung auch zwischen einer Fahrzeugkabine und der Karosserie wirkend angeordnet sein.

Es ist Aufgabe der Erfindung gattungsgemäße Fahrzeugschwingungsvorrichtungen weiterzuentwickeln, so dass sie wartungsärmer und standfester ausgelegt sind.

Die Aufgabe der Erfindung wird von einer Fahrzeugschwingungsvorrichtung eines Fahrzeugsitzes oder einer Fahrzeugkabine mit einem Unterteil und mit einem gegenüber diesem Unterteil auslenkbaren Oberteil gelöst, bei welcher das Oberteil und das Unterteil mittels mindestens einer Federungseinrichtung federnd miteinander verbunden sind und bei welcher die Federungseinrichtung ein deformierbares Fluidfederteil mit einem flexiblen Druckkammerelement und eine Deformationseinrichtung mit Deformationselementen umfasst, wobei das deformierbare Fluidelement bei einer Auslenkung des Oberteils gegenüber dem Unterteil zumindest teilweise durch die Deformationselemente deformiert wird und wobei erfindungsgemäß zwischen dem flexiblen Druckkammerelement und den Deformationselementen ein zusätzliches Scheuerschutzelement angeordnet ist.

Erfindungsgemäß kommt das flexible Druckkammerelement durch das zusätzliche Scheuerschutzelement nicht mehr mit den Deformationselementen direkt in Kontakt, so dass die Gefahr eines vorzeitigen bzw. schnellen Verschleißes des flexiblen Druckkammerelements extrem reduziert ist. Hierdurch können Wartungsintervalle wesentlich länger gewählt werden. Zudem wird die Standfestigkeit der Fahrzeugschwingungsvorrichtung insgesamt stark erhöht.

Das flexible Druckkammerelement ist hierbei sowohl dehnbar, insbesondere hinsichtlich seines Umfangs, als auch biegbar bzw. krümmbar, um der Federungseinrichtung gewünschte Federungseigenschaften zu verleihen.

Dadurch, dass das flexible Druckkammerelement mit unterschiedlichen Drücken beaufschlagt werden kann, können zudem unterschiedliche Federkennlinien an der Federungseinrichtung realisiert werden.

Idealerweise wohnen der Federungseinrichtung mithilfe des flexiblen Druckkammerelements auch sehr gute dämpfende Eigenschaften inne, so dass ein Schwingen des Oberteils gut gedämpft und insbesondere ein Aufschaukeln der Fahrzeugschwingungsvorrichtung gut unterbunden werden kann. Diese dämpfenden Eigenschaften können durch unterschiedlich gewählte Drücke zudem gut moduliert werden.

Das flexible Druckkammerelement ist idealerweise als druckfestes, dehnbares Schlauchelement ausgestaltet, wodurch es sehr flach gebaut und baulich gut in die Fahrzeugschwingungsvorrichtung integriert werden kann. Insofern handelt es sich bei dem deformierbaren Fluidelement um ein längliches deformierbares Fluidelement.

Insofern kann mittels des deformierbaren Fluidfederteils ein pneumatischer Muskel an der Fahrzeugschwingungsvorrichtung geschaffen werden, um insbesondere eine Horizontalschwingung des Oberteils zu ermöglichen und auch zu dämpfen. Mittels des flexiblen Druckkammerelements ist somit auch ein flexibles und dehnbares Mantelelement für einen solchen pneumatischen Muskel realisiert.

Der Begriff "Fahrzeugschwingungsvorrichtung" beschreibt im Sinne der Erfindung eine Vorrichtung, mittels welcher das auslenkbare Oberteil gegenüber dem Unterteil insbesondere in Fahrzeuglängsrichtung und/oder in Fahrzeugbreitenrichtung horizontal schwingend gelagert werden kann. Insofern handelt es sich bei der vorliegenden Federungseinrichtung auch um eine Horizontalfederungseinrichtung.

Kumulativ oder alternativ kann auch eine Vertikalfederungseinrichtung realisiert sein, so dass das Oberteil gegenüber dem Unterteil auch vertikal schwingend in Fahrzeughöhenrichtung auslenkbar ist.

Das vorliegende Oberteil kann hierbei ein einem Sitzteil des Fahrzeugsitzes oder einem Kabinenboden der Fahrzeugkabine zugewandtes Bauteil der Fahrzeugschwingungsvorrichtung sein. Es kann aber auch alternativ durch eine Komponente des Fahrzeugsitzes oder der Fahrzeugkabine definiert sein.

Das entsprechende Unterteil ist vorzugsweise ein der Karosserie zugewandtes Bauteil der Fahrzeugschwingungsvorrichtung. Die Fahrzeugschwingungsvorrichtung kann besonders bauteilreduziert gebaut werden, wenn das Unterteil eine Komponente der Karosserie ist.

Aber auch eine umgekehrte Zuordnung des Unterteils und des Oberteils sind bei einer entsprechenden Ausgestaltung der Fahrzeugschwingungsvorrichtung möglich. Das heißt, dass Unterteil könnte auch sitzteilseitig und das Oberteil könnte karosserieseitig befestigt sein.

Zwar könnte die Standfestigkeit der Fahrzeugschwingungsvorrichtung durch ein dickwandigeres flexibles Druckkammerelement erhöht werden, jedoch würde hierdurch das flexible Druckkammerelement steifer werden. Dies hätte jedoch nachteilig zur Folge, dass sich insbesondere die Federungseigenschaften, aber auch die Dämpfungseigenschaften, der Federungseinrichtung verschlechtern würden.

Es versteht sich, dass dieses zusätzliche Scheuerschutzelement vielfältig ausgestaltet sein kann.

Eine bevorzugte Ausführungsvariante sieht vor, dass das Scheuerschutzelement aus einem zelligen Polyurethan hergestellt ist, auch wenn eine zellige Materialstruktur für vorliegenden Verschleißschutzeinsatz widersinnig erscheinen mag.

Es hat sich jedoch gezeigt, dass ein Scheuerschutzelement aus einem zelligen Polyurethan die Dehnbewegungen des flexiblen Druckkammerelements kaum einschränken und darüber hinaus sehr gut dauerhaft ertragen kann und darüber hinaus dennoch sehr gute Verschleißeigenschaften erzielt werden können.

Dies gilt insbesondere dann, wenn das Scheuerschutzelement aus Cellasto® oder Sylomer® hergestellt ist. Es hat sich erwiesen, dass derartige Materialien besonders scheuer- und reißfest sind und somit als Scheuerschutzelemente im Sinne der Erfindung auch eine extrem hohe Dauerbelastbarkeit gewährleisten können.

Natürlich können im Zusammenhang mit dem Scheuerschutzelement auch andere Materialien, etwa kompakte Elastomere, wie PU, PVC, oder dergleichen eingesetzt werden, wenn dies beispielsweise im Hinblick auf spezielle flexible Druckkammerelemente sinnvoll erscheint.

Eine konstruktiv sehr einfach ausgestaltete, aber dennoch sehr effektive Ausführungsvariante sieht vor, dass das Scheuerschutzelement ein schlauchartiges Schutzhüllenelement aufweist, in welchem das deformierbare Fluidfederteil zumindest teilweise angeordnet ist.

Ein derartig schlauchartiges Schutzhüllenelement kann insbesondere an einem schlauchartigen Druckkammerelement außerordentlich einfach montiert werden, indem es über das schlauchförmige Mantelteil des flexiblen Druckkammerelements gezogen wird.

Es versteht sich, dass das Scheuerschutzelement lediglich im Kontaktbereich zwischen dem Deformationselementen und dem flexiblen Druckkammerelement außen um das flexible Druckkammerelement herum angeordnet sein braucht, um insbesondere das deformierbare Fluidelement bereits hinreichend gut vor einer mechanischen Abnutzung schützen zu können.

Ist das Scheuerschutzelement bis über Endeinfassungen des flexiblen Druckkammerelements lose gestülpt angeordnet, kann jedoch ein unbeabsichtigte Verrutschen des Scheuerschutzelements gegenüber dem flexiblen Druckkammerelement baulich besonders einfach vermieden werden, ohne dass es hierfür zusätzliche Befestigungselemente bedarf.

An diesen Endeinfassungen ist das Druckkammerelement hinsichtlich seiner Enden fest und druckdicht verschlossen, wobei die Endeinfassungen sogleich noch Befestigungsmittel zum Befestigen an dem Oberteil oder dem Unterteil der Fahrzeugschwingungsvorrichtung umfassen können.

Alternativ zu dem schlauchartigen Schutzhüllenelement kann das flexible Druckkammerelement auch mit einem zelligen Polyurethan oder dergleichen unlösbar beschichtet werden.

Der vorliegende Schutzeffekt kann beispielsweise auch dadurch erzielt werden, dass das Scheuerschutzelement aus einer Beflockungsbeschichtung besteht. Hierzu wird vorzugsweise ein zelliges Polyurethan als verschleißfeste Beschichtung außen auf die Mantelfläche mit an sich bekannten Verfahren aufgeflockt. Auch eine solche Beflockungsbeschichtung kann sehr flexibel sein und insofern Dehn- oder Krümmungsbewegungen des deformierbaren Fluidfederteils mitmachen.

Darüber hinaus ist es vorteilhaft, wenn das Scheuerschutzelement Mittel zum Reduzieren einer Reibung gegenüber den Deformationselementen umfasst. Allein hierdurch kann der mechanische Verschleiß weiter reduziert werden. Derartige Mittel zum Reduzieren der Reibung können beispielsweise pulverförmige Substanzen, Öle, Fette oder dergleichen umfassen, welche zwischen den Deformationselementen und der Mantelfläche des Scheuerschutzelements wirken.

Diese Mittel zum Reduzieren der Reibung können jedoch auch zwischen dem flexiblen Druckkammerelement und dem zusätzlichen Scheuerschutzelement wirkend angeordnet sein, wodurch die mechanische Scheuerbelastung an dem flexiblen Druckkammerelement nochmals verringert werden kann, sollte sich das zusätzliche Scheuerschutzelement gegenüber dem flexiblen Druckkammerelement verschieben können.

Eine vorteilhafte Ausführungsvariante sieht vor, dass das Scheuerschutzelement Mittel zum Speichern eines Schmierstoffs umfasst. Durch die Mittel zum Speichern des Schmierstoffs kann vorteilhafterweise ein Depot an Schmiermitteln vorgehalten werden, wodurch ein Schmierstoff, beispielsweise ein Öl oder Fett, zeitlich besonders lang an der Federungseinrichtung vorgehalten werden kann.

Die Mittel zum Speichern können mithilfe von Poren des zelligen Polyurethans konstruktiv besonders einfach ausgestaltet werden, so dass auf ein zusätzliches Zuführen von außerhalb idealerweise vollständig verzichtet werden kann.

Die Aufgabe der Erfindung wird auch von einem Fahrzeugsitz mit einem Sitzteil, mit einem Rückenlehnenteil und mit einem Sitzunterbau gelöst, bei welchem der Sitzunterbau an einem Karosserieteil eines Kraftfahrzeugs angeordnet werden kann und sich der Fahrzeugsitz durch eine Fahrzeugschwingungsvorrichtung nach einem der vorliegend beschriebenen Merkmale oder einer der vorliegend beschriebenen Merkmalskombinationen auszeichnet.

Die vorliegende Fahrzeugschwingungsvorrichtung ermöglicht hinsichtlich eines Fahrzeugsitzes einen äußerst kompakt bauenden Sitzunterbau bei sehr guten Federungs- und Dämpfungseigenschaften.

Darüber hinaus wird die Aufgabe der Erfindung auch von einer Fahrzeugkabine eines Kraftfahrzeugs mit einer Fahrzeugschwingungsvorrichtung zum federnden Lagern der Fahrzeugkabine an einem Karosserieteil des Kraftfahrzeugs gelöst, wobei sich die Fahrzeugkabine durch eine Fahrzeugschwingungsvorrichtung nach einem der vorliegend beschriebenen Merkmale oder einer der vorliegend beschriebenen Merkmalskombinationen auszeichnet.

Mittels der vorliegenden Fahrzeugschwingungsvorrichtung kann ebenso eine komplette Fahrzeugkabine vorteilhaft gegenüber der Fahrzeugkarosserie federnd und dämpfend gelagert werden.

Weitere Vorteile, Ziele und Eigenschaften vorliegender Erfindung werden anhand anliegender Zeichnung und nachfolgender Beschreibung erläutert, in welchen beispielhaft eine in einem Sitzunterbau eines Fahrzeugsitzes verbaute Fahrzeugschwingungsvorrichtung mit einer Horizontalfederungseinrichtung dargestellt und beschrieben ist. In der Zeichnung zeigen:
- Figur 1: schematisch eine teilweise geschnittene Vorderansicht eines in einem Nutzkraftfahrzeug eingebauten Fahrzeugsitzes mit einer eine Horizontalfederungseinrichtung umfassenden Fahrzeugschwingungsvorrichtung in einem unausgelenkten Zustand;
- Figur 2: schematisch eine Aufsicht der Horizontalfederungseinrichtung der Fahrzeugschwingungsvorrichtung im unausgelenkten Zustand aus der Figur 1; und
- Figur 3: schematisch eine Schnittansicht der Horizontalfederungseinrichtung aus den Figuren 1 und 2.

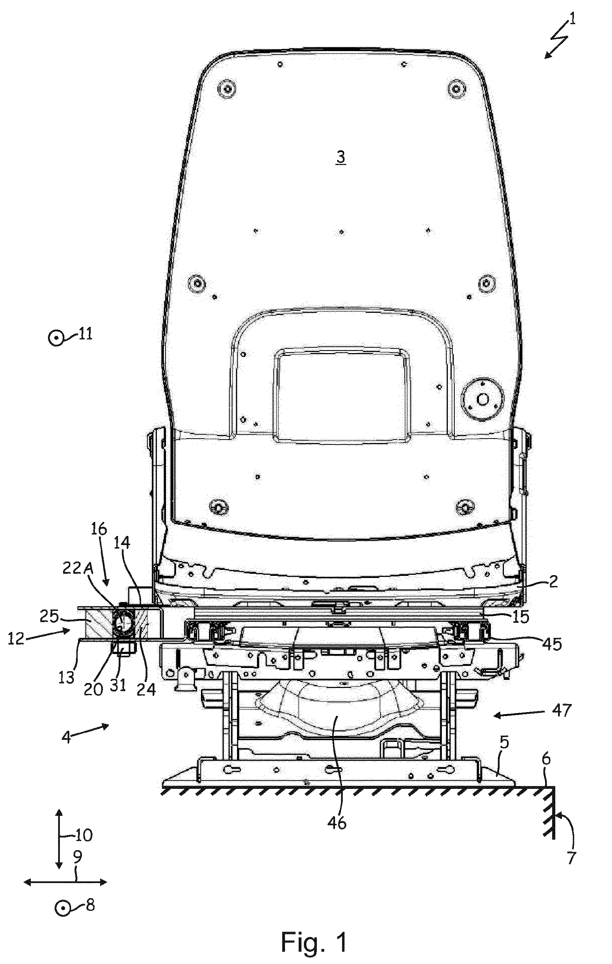

Der in der Figur 1 gezeigte Fahrzeugsitz 1 umfasst ein Sitzteil 2, ein Rückenlehnenteil 3 und einen Sitzunterbau 4, der mit einem Plattenteil 5 an einem Karosserieteil 6 eines Nutzkraftfahrzeugs 7 befestigt ist.

Das Nutzkraftfahrzeug 7 definiert hierbei eine Fahrzeuglängserstreckung 8, eine Fahrzeugbreitenerstreckung 9 und eine Fahrzeughöhenerstreckung 10, wobei der Fahrzeugsitz 1 derart innerhalb des Nutzkraftfahrzeugs 7 ausgerichtet ist, dass die Hauptsitzrichtung 11 des Fahrzeugsitzes 1 mit der Fahrzeuglängserstreckung 8 fluchtet.

Der Sitzunterbau 4 umfasst eine Fahrzeugschwingungsvorrichtung 12, mittels welcher das Sitzteil 2 und das Rückenlehnenteil 3 horizontal in Richtung der Fahrzeugbreitenerstreckung 9 schwingen kann.

In diesem Ausführungsbeispiel umfasst die Fahrzeugschwingungsvorrichtung 12 ein plattenförmiges Unterteil 13 und ein plattenförmiges Oberteil 14. Das Oberteil 14 ist mithilfe eines Schienenpaars 15 gegenüber dem Unterteil 13 translatorisch auslenkbar angeordnet, wobei das Schienenpaar 15 zwischen dem Oberteil 14 und dem Unterteil 13 angeordnet ist.

Des Weiteren umfasst die Fahrzeugschwingungsvorrichtung 12 eine Horizontalfederungseinrichtung 16, mittels welcher das Unterteil 13 und das Oberteil 14 derart federnd miteinander verbunden sind, dass insbesondere das Sitzteil 2 gegenüber dem Karosserieteil 6 hier in Richtung der Fahrzeugbreitenerstreckung 9 schwingen kann.

Es versteht sich, dass bei einer entsprechenden Ausgestaltung der Fahrzeugschwingungsvorrichtung 12 bzw. Anordnung dieser Horizontalfederungseinrichtung 16 oder einer weiteren derartigen Horizontalfederungseinrichtung 16 das Oberteil 14 gegenüber dem Unterteil 13 kumulativ oder alternativ auch in Richtung der Fahrzeuglängserstreckung 8 schwingen kann.

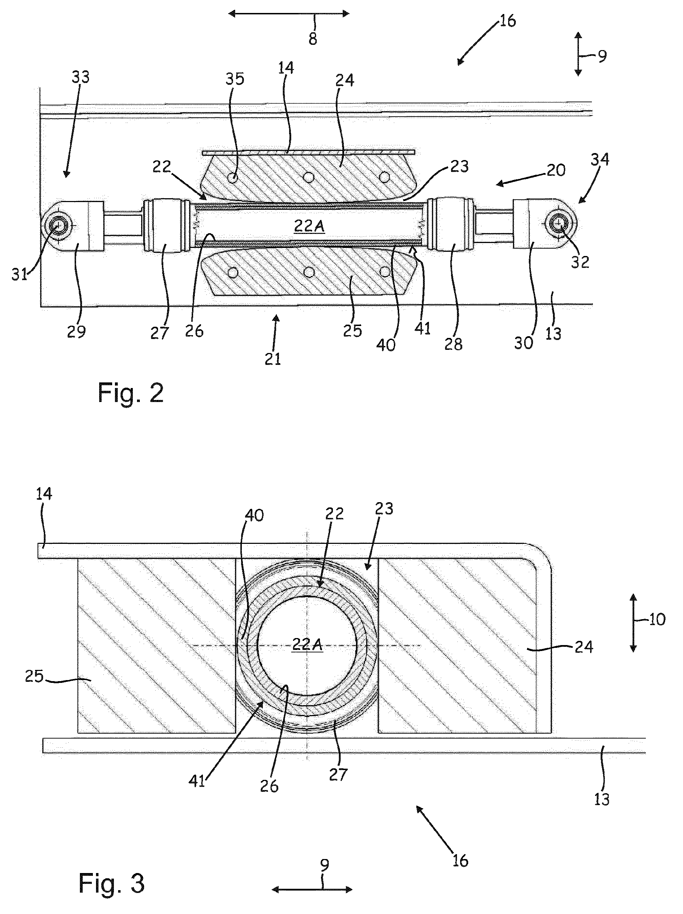

Die Horizontalfederungseinrichtung 16 ist mit einem deformierbaren Fluidfederteil 20 (siehe insbesondere auch Figur 2) und mit einer Deformationseinrichtung 21 hierfür ausgestattet, um eine Federung zwischen dem Oberteil 14 und dem Unterteil 13 zu ermöglichen.

Das deformierbare Fluidfederteil 20 weist ein flexibles Druckkammerelement 22 mit einer Druckkammer 22A auf, welches in einem Deformationsraum 23 zwischen zwei Deformationselementen 24 und 25 der Deformationseinrichtung 21 derart gelagert ist, dass es durch die zwei Deformationselemente 24 und 25 deformiert wird, wenn das Oberteil 14 gegenüber dem Unterteil 13 in Fahrzeugbreitenrichtung 9 ausgelenkt wird.

Vorteilhafterweise kann mittels des in der Druckkammer 22A vorhandenen Drucks die Federkennlinie der Horizontalfederungseinrichtung 16 sehr vielschichtig moduliert werden. Insbesondere mittels des deformierbaren Fluidfederteils 20 lassen sich an der Horizontalfederungseinrichtung 16 aber auch Dämpfungseigenschaften vorteilhaft einstellen.

Das flexible Druckkammerelement 22 zeichnet sich durch ein schlauchförmiges Mantelteil 26 aus, welches jeweils mittels einer Klemm-Schraubverbindung (hier nicht gezeigt) an einer ersten Endeinfassung 27 und an einer zweiten Endeinfassung 28 des deformierbaren Fluidfederteils 20 druckdicht angeschlossen ist.

Die Endeinfassungen 27 und 28 sind jeweils durch ein Lageraugenelement 29 bzw. 30 und einer Bolzenschraubenverbindung 31 bzw. 32 an dem Unterteil 13 festgelegt, so dass das deformierbare Fluidfederteil 20 der Horizontalfederungseinrichtung 16 mit seinen beiden Enden 33 und 34 an dem Unterteil 13 der Fahrzeugschwingungsvorrichtung 12 befestigt ist.

Die den Deformationsraum 23 ausgestaltenden Deformationselemente 24 und 25 sind dagegen über Schraubverbindungen 35 (hier nur exemplarisch beziffert) fest mit dem Oberteil 14 der Fahrzeugschwingungsvorrichtung 12 verbunden.

Das flexible Druckkammerelement 22 bzw. das schlauchförmige Mantelteil 26 bestehen aus einem mit Polyamidgewebe verstärktem Gummimaterial. Das flexible Druckkammerelement 22 bzw. das schlauchförmige Mantelteil 26 werden durch den Deformationskontakt mit den zwei Deformationselementen 24 und 25 mechanisch stark belastet.

Um insbesondere das Gummimaterial vor einer derartigen mechanischen Belastung besser zu schützen, ist zwischen dem flexiblen Druckkammerelement 22 und den Deformationselementen 24 und 25 ein zusätzliches Scheuerschutzelement 40 (siehe insbesondere auch Figur 3) angeordnet.

Das zusätzliche Scheuerschutzelement 40 ist in diesem Ausführungsbeispiel aus dem zelligen Polyurethan Cellasto® hergestellt und zwar in Form eines schlauchartigen Schutzhüllenelements 41, welches über das schlauchförmige Mantelteil 26 gezogen ist.

Während das schlauchförmige Mantelteil 26 mit den Endeinfassungen 27 bzw. 28 fest verbunden ist, ist das schlauchartige Schutzhüllenelement 41 nur lose über diese Endeinfassungen 27 bzw. 28 angeordnet bzw. gestülpt, so dass eine sehr einfache Montage erfolgen kann, gegebenenfalls auch nachträglich. Insofern kann das schlauchartige Schutzhüllenelement 41 auch problemlos ausgewechselt werden, wenn es an oder bevor es an seine Verschleißgrenze gelangt.

Um eine Reibung insbesondere zwischen dem schlauchartigen Schutzhüllenelement 41 und den Deformationselementen 24 und 25 vorteilhaft reduzieren zu können, kann das schlauchartige Schutzhüllenelement 41 noch mit einem Schmierstoff (nicht gezeigt) als Mittel zur Reduzierung der Reibung gegenüber den Deformationselementen 24 und 25 versehen sein.

Vorteilhafterweise weist das aus dem zelligen Polyurethan Cellasto® hergestellte schlauchartige Schutzhüllenelement 41 eine genügend hohe Anzahl an Poren auf, in welchen der Schmierstoff deponiert werden kann. Insofern stellt das schlauchartige Schutzhüllenelement 41 noch eine Vielzahl an depotartigen Mitteln zum Speichern des Schmierstoffs zur Verfügung.

Insofern eignet sich das vorliegende zusätzliche Scheuerschutzelement 40 sehr gut dazu, das flexible Druckkammerelement 22 vor einer kritischen mechanischen Verschleißbelastung durch die zwei Deformationselemente 24 bzw. 25 zu bewahren.

Wie noch gut aus der Darstellung gemäß der Figur 1 ersichtlich ist, ist das Oberteil 14 der Fahrzeugschwingungsvorrichtung 12 in diesem Ausführungsbeispiel an dem Sitzteil 2 befestigt.

Das Unterteil 13 der Fahrzeugschwingungsvorrichtung 12 ist dagegen an einem weiteren Schienenpaar 45 eines mit einer Vertikalluftfedereinrichtung 46 ausgerüsteten Scherengestells 47, welche zwischen der Fahrzeugschwingungsvorrichtung 12 und dem Plattenteil 5 platziert sind, befestigt. Mittels des Scherengestells 47 und der Vertikalluftfedereinrichtung 46 gelingt eine Vertikalfederung des Sitzteils 2 und des Rückenlehnenteils 3 in Richtung der Fahrzeughöhenerstreckung 10.

Es versteht sich, dass es sich bei dem vorstehend erläuterten Ausführungsbeispiel lediglich um eine erste Ausgestaltung der erfindungsgemäßen Fahrzeugschwingungsvorrichtung handelt. Insofern beschränkt sich die Ausgestaltung der Erfindung nicht auf dieses Ausführungsbeispiel.

### Bezugszeichenliste

- 1: Fahrzeugsitz
- 2: Sitzteil
- 3: Rückenlehnenteil
- 4: Sitzunterbau
- 5: Plattenteil
- 6: Karosserieteil
- 7: Nutzkraftfahrzeug
- 8: Fahrzeuglängserstreckung
- 9: Fahrzeugbreitenerstreckung
- 10: Fahrzeughöhenerstreckung
- 11: Hauptsitzrichtung
- 12: Fahrzeugschwingungsvorrichtung
- 13: Unterteil
- 14: Oberteil
- 15: Schienenpaar
- 16: Horizontalfederungseinrichtung
- 20: deformierbares Fluidfederteil
- 21: Deformationseinrichtung
- 22: flexibles Druckkammerelement
- 22A: Druckkammer
- 23: Deformationsraum
- 24: erstes Deformationselement
- 25: zweites Deformationselement
- 26: schlauchförmiges Mantelteil
- 27: erste Endeinfassung
- 28: zweite Endeinfassung
- 29: erstes Lageraugenelement
- 30: zweites Lageraugenelement
- 31: erste Bolzenschraubenverbindung
- 32: zweite Bolzenschraubenverbindung
- 33: erstes Ende
- 34: zweites Ende
- 35: Schraubverbindungen
- 40: zusätzliches Scheuerschutzelement
- 41: schlauchartiges Schutzhüllenelement
- 45: weiteres Schienenpaar
- 46: Vertikalluftfedereinrichtung
- 47: Scherengestell

## Patentansprüche

1. Fahrzeugschwingungsvorrichtung (12) eines Fahrzeugsitzes (1) oder einer Fahrzeugkabine mit einem Unterteil (13) und mit einem gegenüber diesem Unterteil (13) auslenkbaren Oberteil (14), bei welcher das Oberteil (14) und das Unterteil (13) mittels mindestens einer Federungseinrichtung (16) federnd miteinander verbunden sind, und bei welcher die Federungseinrichtung (16) ein deformierbares Fluidfederteil (20) mit einem flexiblen Druckkammerelement (22) und eine Deformationseinrichtung (21) mit Deformationselementen (24, 25) umfasst, wobei das deformierbare Fluidelement (20) bei einer Auslenkung des Oberteils (14) gegenüber dem Unterteil (13) zumindest teilweise durch die Deformationselemente (24, 25) deformiert wird,
**dadurch gekennzeichnet, dass**
zwischen dem flexiblen Druckkammerelement (22) und den Deformationselementen (24, 25) ein zusätzliches Scheuerschutzelement (40) angeordnet ist.

2. Fahrzeugschwingungsvorrichtung (12) nach Anspruch 1,
**dadurch gekennzeichnet, dass**
das Scheuerschutzelement (40) aus einem zelligen Polyurethan, insbesondere aus Cellasto® oder Sylomer®, hergestellt ist.

3. Fahrzeugschwingungsvorrichtung (12) nach Anspruch 1 oder 2,
**dadurch gekennzeichnet, dass**
das Scheuerschutzelement (40) ein schlauchartiges Schutzhüllenelement (41) aufweist, in welchem das deformierbare Fluidfederteil (20) zumindest teilweise angeordnet ist.

4. Fahrzeugschwingungsvorrichtung (12) nach einem der Ansprüche 1 bis 3,
**dadurch gekennzeichnet, dass**
das Scheuerschutzelement (40) bis über Endeinfassungen (27, 28) des flexiblen Druckkammerelements (22) lose gestülpt angeordnet ist.

5. Fahrzeugschwingungsvorrichtung (12) nach einem der Ansprüche 1 bis 3,
**dadurch gekennzeichnet, dass**
das Scheuerschutzelement (40) aus einer Beflockungsbeschichtung besteht.

6. Fahrzeugschwingungsvorrichtung (12) nach einem der Ansprüche 1 bis 5,
**dadurch gekennzeichnet, dass**
das Scheuerschutzelement (40) Mittel zum Reduzieren einer Reibung gegenüber den Deformationselementen (24, 25) umfasst.

7. Fahrzeugschwingungsvorrichtung (12) nach einem der Ansprüche 1 bis 6,
**dadurch gekennzeichnet, dass**
das Scheuerschutzelement (40) Mittel zum Speichern eines Schmierstoffs umfasst.

8. Fahrzeugschwingungsvorrichtung (12) nach einem der Ansprüche 1 bis 7,
**dadurch gekennzeichnet, dass**
das flexible Druckkammerelement (22) dehnbar aus einem mit einem Polyamidgewebe verstärktem Gummimaterial hergestellt ist.

9. Fahrzeugsitz (1) mit einem Sitzteil (2), mit einem Rückenlehnenteil (3) und mit einem Sitzunterbau (4), bei welchem der Sitzunterbau (4) an einem Karosserieteil (6) eines Kraftfahrzeugs (7) angeordnet werden kann,
**gekennzeichnet durch**
eine Fahrzeugschwingungsvorrichtung (12) nach einem der vorhergehenden Ansprüche.

10. Fahrzeugkabine eines Kraftfahrzeugs (7) mit einer Fahrzeugschwingungsvorrichtung (12) zum federnden Lagern der Fahrzeugkabine an einem Karosserieteil (6) des Kraftfahrzeugs (6),
**gekennzeichnet durch**
eine Fahrzeugschwingungsvorrichtung (12) nach einem der Ansprüche 1 bis 8.

## Claims

1. Vehicle vibration device (12) of a vehicle seat (1) or of a vehicle cab, comprising a lower part (13) and an upper part (14) which can be deflected relative to said lower part (13), in which device the upper part (14) and the lower part (13) are resiliently interconnected by means of at least one suspension apparatus (16) and in which the suspension apparatus (16) comprises a deformable fluid spring part (20) that has a flexible pressure chamber element (22) and a deformation apparatus (21) that has deformation elements (24, 25), the deformable fluid element (20) being deformed by the deformation elements (24, 25) at least in part when the upper part (14) is deflected relative to the lower part (13),
**characterised in that**
an additional anti-abrasion element (40) is arranged between the flexible pressure chamber element (22) and the deformation elements (24, 25).

2. Vehicle oscillation device (12) according to claim 1,
**characterised in that**
the anti-abrasion element (40) is produced from a cellular polyurethane, in particular from Cellasto® or Sylomer®.

3. Vehicle oscillation device (12) according to either claim 1 or claim 2,
**characterised in that**
the anti-abrasion element (40) has a tubular protective sleeve element (41) in which the deformable fluid spring part (20) is arranged at least in part.

4. Vehicle oscillation device (12) according to any of claims 1 to 3, **characterised in that** the anti-abrasion element (40) is arranged so as to be loosely pulled as far as over end enclosures (27, 28) of the flexible pressure chamber element (22).

5. Vehicle oscillation device (12) according to any of claims 1 to 3,
**characterised in that**
the anti-abrasion element (40) consists of a flock coating.

6. Vehicle oscillation device (12) according to any of claims 1 to 5,
**characterised in that**
the anti-abrasion element (40) comprises means for reducing a friction with respect to the deformation elements (24, 25).

7. Vehicle oscillation device (12) according to any of claims 1 to 6,
**characterised in that**
the anti-abrasion element (40) comprises means for storing a lubricant.

8. Vehicle oscillation device (12) according to any of claims 1 to 7,
**characterised in that**
the flexible pressure chamber element (22) is produced, so as to be expandable, from a rubber material reinforced with a polyamide fabric.

9. Vehicle seat (1) comprising a seat part (2), a backrest part (3) and a seat substructure (4), in which seat the seat substructure (4) can be arranged on a bodywork part (6) of a motor vehicle (7),
**characterised by**
a vehicle oscillation device (12) according to any of the preceding claims.

10. Vehicle cab of a motor vehicle (7), comprising a vehicle oscillation device (12) for resiliently mounting the vehicle cab on a bodywork part (6) of the motor vehicle (6),
**characterised by**
a vehicle oscillation device (12) according to any of claims 1 to 8.

## Revendications

1. Dispositif d'oscillation de véhicule (12) d'un siège de véhicule (1) ou d'une cabine de véhicule avec une partie inférieure (13) et avec une partie supérieure (14) pouvant être déviée par rapport à cette partie inférieure (13), dans lequel la partie supérieure (14) et la partie inférieure (13) sont reliées entre elles de manière élastique au moyen d'au moins un dispositif d'amortissement (16) et dans lequel le dispositif d'amortissement (16) comprend une partie d'amortissement à fluide déformable (20) avec un élément à chambre de pression flexible (22) et un dispositif de déformation (21) avec des éléments de déformation (24, 25), l'élément de fluide déformable (20) étant au moins partiellement déformé par les éléments de déformation (24, 25) lors d'une déviation de la partie supérieure (14) par rapport à la partie inférieure (13),
**caractérisé en ce qu'**
entre l'élément à chambre de pression flexible (22) et les éléments de déformation (24, 25), se trouve un élément supplémentaire de protection contre l'abrasion (40).

2. Dispositif d'oscillation de véhicule (12) selon la revendication 1,
**caractérisé en ce que**
l'élément de protection contre l'abrasion (40) est constitué d'un polyuréthane cellulaire, plus particulièrement de Cellasto® ou de Sylomer®.

3. Dispositif d'oscillation de véhicule (12) selon la revendication 1 ou 2,
**caractérisé en ce que**
l'élément de protection contre l'abrasion (40) comprend un élément à enveloppe de protection (41) de type tuyau, dans lequel la partie d'amortissement à fluide (20) déformable est disposée au moins partiellement.

4. Dispositif d'oscillation de véhicule (12) selon l'une des revendications 1 à 3,
**caractérisé en ce que**
l'élément de protection contre l'abrasion (40) est disposé de manière rabattue et lâche jusqu'au-dessus des bordures d'extrémité (27, 28) de l'élément à chambre de pression flexible (22).

5. Dispositif d'oscillation de véhicule (12) selon l'une des revendications 1 à 3,
**caractérisé en ce que**
l'élément de protection contre l'abrasion (40) est constitué d'un revêtement par flocage.

6. Dispositif d'oscillation de véhicule (12) selon l'une des revendications 1 à 5,
**caractérisé en ce que**
l'élément de protection contre l'abrasion (40) comprend des moyens permettant de réduire une friction avec les éléments de déformation (24, 25).

7. Dispositif d'oscillation de véhicule (12) selon l'une des revendications 1 à 6,
**caractérisé en ce que**
l'élément de protection contre l'abrasion (40) comprend des moyens permettant de stocker un lubrifiant.

8. Dispositif d'oscillation de véhicule (12) selon l'une des revendications 1 à 7,
**caractérisé en ce que**
l'élément à chambre de pression flexible (22) est constitué, de façon à être dilatable, d'un matériau de type caoutchouc renforcé par une toile de polyamide.

9. Siège de véhicule (1) avec une partie d'assise (2), avec une partie de dossier (3) et avec une structure d'assise (4), dans lequel la structure d'assise (4) peut être disposée sur une partie de carrosserie (6) d'un véhicule automobile (7),
**caractérisé par**
un dispositif d'oscillation de véhicule (12) selon l'une des revendications précédentes.

10. Cabine de véhicule d'un véhicule automobile (7) avec un dispositif d'oscillation de véhicule (12) pour le logement avec amortissement de la cabine du véhicule sur une partie de carrosserie (6) du véhicule automobile (6),
**caractérisé par**
un dispositif d'oscillation de véhicule (12) selon l'une des revendications 1 à 8.
